# EUROPEAN PATENT APPLICATION

(11) **EP 2 813 993 A1**
(43) Date of publication of application: **17.12.2014**
(21) Application number: 14160301.9
(22) Date of filing: 17.03.2014
(51) Int. Cl.: G06Q 30/02, G10L 19/00, G10L 19/018

(54) **System and method for providing inaudible codes and corresponding information to users via their computing devices**

(30) Priority: 15.03.2013 US 201361792902 P
(71) Applicant: Weinblatt, Lee S., Teaneck New Jersey 07666 (US)
(72) Inventor: Weinblatt Lee S., Teaneck, NJ 07666 (US); Yukich, Rudy K. K., Columbia, ML 21045 (US); McKnight Jr., Ellicott City, ML 21043 (US)
(74) Representative: Epping - Hermann - Fischer

(57) **Abstract**

In accordance with embodiments of the inventions, systems and methods are provided to facilitate the processing of inaudible codes in audio and audio/visual streams broadcast over television, radio, computer, or in piped music or muzak, for example, by computing devices, such as mobile devices and computers, for example. The inaudible codes are associated with information provided by third parties, such as coupons, offers, advertising, explanatory information, etc. The mobile devices may include smart phones, tablets, laptop computers, digital readers, etc. Codes and corresponding offers may be provided to a computing device by a code/offer management system via a network, and stored by the computing device, upon the request of the respective device. When an inaudible code is received and identified by a respective device, it is compared to the stored codes and if there is a match, the corresponding offer may be identified and displayed or offered for display.

## Description

### Priority Claim

The present application claims the benefit of U.S. Provisional Patent Application No. 61/792,902, which was filed on March 15, 2013, is assigned to the assignee of the present invention, and is incorporated by reference herein.

### Field of the Invention

The invention relates to the use of inaudible codes to provide offers and other information to computing devices, such as mobile computing devices and personal computers, and, in one example, facilitating processing of inaudible codes via applications on the computing devices.

### Background of the Invention

Companies provide applications ("Apps") for downloading to handheld devices, such as smartphones, to enhance the user's experience with the goods and services of the company. For example, Pizza Hut has an App to enable customers to order food online. American Express has an App for authorizing specified bank services.

Inaudible codes have been inserted into audio streams of television broadcasts to provide offers, coupons, and other types of information to viewers of television programming. US Patent Publication No. 2003/0144035 A describes a system and method for providing consumer incentives in the form of coupons that are made available by a stationary base unit in a room near a television or other device for reproducing video and/or audio programming signal. The base unit is a self-contained, relatively small and unobtrusive apparatus that can be placed on a surface in the room in wireless communication with other components. To enable data communication with a central processing station, the base unit is connected to a telephone line, ISDN line or cable, for example. A wireless communication system, such as a satellite or cellular wireless communication system may be used, as well.

Coupons derived from the base unit may be displayed on a portable device, such as a personal data assistant (PDA). The consumer can scroll through several electronically stored coupons to display the one that is then of interest. When the consumer is at a cash register, for example, the coupon of interest may be displayed on the portable unit and shown to the cashier for redemption.

### Summary of the Invention

In accordance with embodiments of the inventions, systems and methods are provided to facilitate the processing of inaudible codes in audio and audio/visual streams broadcast over television, radio, computer, or in piped music or muzak, for example, by computing devices, such as mobile devices and computers, for example. Inaudible codes are designed to be inaudible by a human or animal ear, but may be decoded by appropriate devices. The inaudible codes are associated with items of information provided by third parties, such as coupons, offers, advertising, explanatory information, etc. The codes may be in audio and audio/video streams broadcast to computing devices in private places, such as their homes, and/or in public places, such as in retail establishments, malls, and museums, for example. The mobile devices may include smart phones, tablets, laptop computers, digital readers, etc.

In accordance with one embodiment of the invention, codes and corresponding offers are periodically provided to a computing device by an inaudible code/offer management system via a network, and stored by the computing device. When an inaudible code is received and identified, it is compared to the stored codes and if there is a match, the corresponding offer may be identified and offered for display, or displayed.

Codes may be decoded and corresponding offers identified by applications ("Apps"). In one example, an App may be able to decode codes and display offers and other items of information related to a plurality of organizations. In another example, an App only displays offers and other items of information for the organization providing that App. A computing device may include both types of Apps. Certain organizations desire that inaudible codes associated with their own offers and other information be processed by their own Apps. Certain operating systems, such as iOS, only allow one App to be open at a time. It is challenging to process codes associated with an organization whose App is not open on the computing device when the audible code is received.

Where inaudible codes and corresponding offers related to a particular organization may only be processed by an App provided by that organization, it may be the case that the App needs to be open when the code is received in order to display the corresponding offer at that time. This may be due to the App itself and/or the type of operating system used by the mobile device, as mentioned above. In embodiments of the invention, third party Apps implementing embodiments of the invention can gain the benefit of codes related to one organization, collected while an App related to a different organization is currently open. In computing devices with an iOS operating system, codes that need to be processed by an App that is not open are provided to the code/offer management system. When the App needed to process the code is opened, the code is provided to the computing device by the system.

In computing devices that use an Android operating system, in contrast, in accordance with embodiments of the invention, codes may be processed even if a corresponding App is not open, as long as the corresponding App is operating in the background. An App running on an Android system may also operate in the same manner as described herein with respect to an iOS operating system.

In another embodiment of the invention, offers are filtered by the system and/or the computing device prior to codes and corresponding items of information being provided to the computing device by the system, and/or prior to the computing device providing an item of information to a user, based on information provided by the user during registration or afterward, and/or the past activity of a respective user. Offers that are more likely to be of interest to particular users are thereby provided to those users, while offers less likely to be of interest are provided less often or not at all.

A typical mall may contain over 200 stores. While each tries to attract the attention of shoppers by offering sales, for example, many may not be able to afford flyers and other types of expensive advertising such as television and radio advertising. In addition, a store may only have a limited number of items on sale or and/or may only have items on sale for a single day. Shoppers may have to identify particular deals for such stores at respective storefronts. Advertisers using traditional TV and radio advertising typically have to remind shoppers of particular deals when they are at or near the store. In one embodiment of the invention, inaudible codes corresponding to offers related to a retail establishment, for example, are included in music or muzak played over speakers inside and/or outside of the retail establishment, which may be a store in a mall, for example. The inaudible codes are received and processed by mobile devices of users in or near the store so that the users receive offers while they are in or near the store.

In accordance with an embodiment of the invention, a system for providing information to a user via a user computing device is disclosed, comprising a processing device and a database to store codes and corresponding items of information to be provided to user computing devices. The processing device is configured to provide the codes and corresponding items of information to respective user computing devices via a network, to be stored in the respective user devices and to be selectively retrieved by a user in response to inaudible codes corresponding to respective items received by the computing device in an audio stream. The processing device may be further configured to receive items of information from third parties, generate a code corresponding to each item of information, and store each item of information in the database in association with the corresponding code. An encoder may be provided, configured to receive an audio stream from a third party, receive at least one inaudible code from the processing device, encode the audio stream with at least one inaudible code, and return the audio stream to the third party, encoded with the at least one inaudible code.

The processing device may be further configured to receive a code from a user's computing device, search the database for the received code, and identify an item of information corresponding to the received code, if available. The processing device is further configured to provide to the user's computing device an indication that an item of information corresponding to the code is available, via the network, and/or provide the item to the user's computing device, via the network. In one example, if the received code corresponds to an item of information from an organization related to an application ("App") stored on the computing device that is closed, then the processing device is configured to provide the code and corresponding item of information to the computing device when the App is open and the computing device and requests an update of codes and corresponding items of information.

The database may store qualification conditions, in association with the item of information and the code, and the processor may be configured to determine whether the user and/or the user device is qualified to receive the retrieved item of information. Items of information may comprise offers, discounts, notices, explanatory material, contests, and/or public service announcements, for example, and may be formatted as links to websites, PDF documents, Word documents, JPEG documents, and/or videos, for example.

The processing device may be configured to filter codes and corresponding items of information provided to a user's computing device based, at least in part, on registration information provided by a user of a respective computing device, and/or algorithmic filtering based on activities of a respective user computing device. The user computing devices may comprise computers and/or mobile computing devices and the user computing devices may receive inaudible codes in audio streams in homes, offices, hotel rooms, and/or public places, for example.

In accordance with another embodiment of the invention, a method of providing information to users via a user device is disclosed comprising providing codes and corresponding items of information to respective user computing devices via a network, to be stored in the respective user devices and to be selectively retrieved by a user in response to inaudible codes corresponding to respective items received by the computing device in an audio stream. The method further comprises receiving a code from a respective user computing device, when the code is not found by the computing device, and searching the database for the received code. The method further comprises identifying an item of information corresponding to the received code, if the received code is found. An indication may be provided to the user's computing device that an item of information corresponding to the code is available to the user's computing device and/or the item may be provided to the user's computing device. The method may further comprise receiving items of information from third parties, generating a unique code corresponding to each item of information, and storing each item of information and corresponding code in the database.

If the received code corresponds to an item of information from an organization related to an application ("App") on the user computing device that is closed, in one example the method further comprises providing the code and corresponding item of information to the computing device when the App is open and the computing device requests an update.

The method may further comprise encoding an audio stream with at least one inaudible code. An item of information may be provided only if the user and/or user device is qualified to receive the item. The method may further comprise filtering codes and corresponding items of information provided to a user's computing device based, at least in part, on registration information provided by a user of a respective computing device, and/or algorithmic filtering based on activities of a respective user computing device.

In accordance with another embodiment of the invention, a computing device is disclosed to receive items of information from a third party. The computing device comprises a processing device, a display, a microphone, and memory to store codes and corresponding items of information. The processing device is configured to analyze audio streams received by the microphone to identify inaudible codes encoded in the audio stream, search the memory for a code corresponding to the identified inaudible code, and identify an item of information corresponding to the code. If a code corresponding to the inaudible code is found, the item may be displayed and/or an indication of the presence of the item of information may be provided on the display. The processing device may be configured to provide an option on the display to view, save, delete, and/or print the item.

The processing device may be configured to receive codes and corresponding items of information from a third party, via a network, and store the codes and corresponding items in the memory. The computing device may be configured to request an update of items and corresponding codes from the third party. In one example, if a code corresponding to the inaudible code is not found in the memory, the processing device is configured to send the code to the third party, via the network, receive an item corresponding to the code from the third party, and provide an indication that an item is available, on the display, and/or display the item. The audio stream may be received from a television, from a radio, or from a speaker, in a home, in an office, in a hotel room, or in a public place, for example. The computing device may comprise a computer or a mobile computing device, such as a smartphone or tablet, for example.

The computing device may further comprise at least one library stored in memory and at least one application ("App") stored in the memory, wherein the processing device is configured to analyze, search, and identify items of information under the control of the at least one library and to display an item of information corresponding to a code under the control of the at least one App. The at least one App may be a generic App configured to cause the processing device to display items of information from a plurality of organizations and/or the at least one App may be a dedicated App configured to display items of information from a respective organization.

The computing device may further comprise an iOS operating system stored in memory, at least one dedicated App stored in memory, and at least one dedicated library corresponding to a respective dedicated App. The library comprises software configured to define a respective cache to store codes and corresponding items of information from a respective organization. The processing device analyzes audio streams to identify inaudible codes, searches the respective cache defined by the respective App for codes corresponding to identified inaudible codes, and identifies items of information corresponding to respective codes based on the comparison, under the control of the library. The memory may comprise first and second memory, and the App may be configured to cause the processing device to store the cache in the first memory while the App is closed, store the cache in the second memory when the App is launched, and search the cache when the cache is in the second memory. The processing device, under the control of the library of open App, may request an update of codes and corresponding items of information from the third party, to store in the cache in the second memory. The first memory may be at least a portion of a flash memory and the second memory may be at least a portion of RAM. In another example, a generic App defines a cache to store codes and corresponding information applicable to a plurality of organizations.

If the code sent to the third party corresponds to an item of information from an organization related to a closed App, then the code and corresponding item of information is received by the computing device when the closed App is launched and the library of the launched App requests an update.

In another example, the computing device further comprises an Android operating system stored in memory, a plurality of Apps stored in memory, and a library stored in memory. The library is configured to define a cache to store offers and corresponding items of information for each of the Apps, and to analyze audio streams, identify codes, and search the cache for matching codes, for each of the Apps.

In accordance with another embodiment of the invention, a method of receiving and displaying items of information by a computing device is disclosed comprising receiving an audio stream by a computing device comprising a processing device, analyzing the audio stream to identify inaudible codes encoded in the audio stream, and searching the memory for a code corresponding to the identified inaudible code. If a code corresponding to the identified inaudible code is found, the method identifies the item of information corresponding to the code, and displays the identified item of information on a display and/or provides an indication of the presence of the item of information on the display. The audio stream may be received from a television, a radio, or a speaker, at home, in an office, in a hotel room, or in a public space, for example. The audio stream may be broadcast by an audio system of a store and may be received from inside of or outside of a store. The computing device may be a computer or mobile computing device, such as a smartphone, for example. The method may further comprise viewing, saving, deleting, and/or printing the item.

Codes and corresponding items of information may be received from a third party, via a network. If a code corresponding to the inaudible code is not found in the memory, the code may be sent to the third party via the network and an item of information corresponding to the code may be received from the third party, via the network, or an indication that such an item is available may be received from the third party.

In accordance with another embodiment of the invention, a method of providing offers to users in public places via user computing devices is disclosed comprising encoding an audio stream with at least one code corresponding to at least one offer to be provided to a user's mobile computing device, broadcasting the audio stream comprising the at least one inaudible code in a public place, by at least one speaker, and redeeming the offer from the user, in or near the public space. The public space may be inside or close enough to a store for a user's computing device to receive the audio stream. The offer may be redeemed from the user, in the store. The offer may be a time-limited offer.

In accordance with another embodiment of the invention, a method of receiving and displaying items of information by a computing device is disclosed comprising receiving an audio stream by a computing device, the computing device comprising a processing device. The method further comprises analyzing the audio stream to identify inaudible codes encoded in the audio stream, by the processing device, and obtaining a filtered item of information corresponding to the identified inaudible code, wherein the filtering is based, at least in part, on information provided by the user and/or algorithmic filtering based on past activities of the user of a respective computing device. The filtered item of information is displayed, or an indication of the presence of the filtered item of information is displayed, on the display.

The term "audio stream" includes audio/visual streams and any other type of transmitted or broadcast stream that includes audio.

### Brief Description of the Drawings

The above and/or other aspects and advantages will become more apparent and more readily appreciated from the following detailed description of embodiments of the invention taken in conjunction with the accompanying drawings of which:
Fig. 1 is a schematic block diagram showing an example of a system in accordance with embodiments of the invention;
Fig. 2 is a schematic representation of an example of a server in the system of Fig. 1, in accordance with an embodiment of the invention;
Fig. 3 is a schematic representation of an example of a typical computing device in the system of Fig. 1, in accordance with an embodiment of the invention;
Fig. 4 is a schematic representation of an example of a home environment in which a mobile device or personal computer, for example, may pick up inaudible codes, in accordance with an embodiment of the invention;
Fig. 5 is a schematic representation of an example of a retail environment in which a mobile device may pick up inaudible codes, in accordance with an embodiment of the invention;
Fig. 6 is a schematic representation of two dedicated App packages and a generic App, in an iOS mobile device;
Fig. 7 is a schematic representation of a launch of an App stored in the ROM of a computing device to RAM;
Fig. 8 is an example of a structure of an App package for an iOS operating system, in accordance with an embodiment of the invention;
Fig. 9 is a schematic representation of three dedicated Apps that share a library in an Android device, in accordance with another embodiment of the invention;
Fig. 10 is an example of a method of operation of the inaudible code/offer management system shown in Fig. 1, in accordance with an embodiment of the invention; and
Fig. 11 is an example of a method of operating a computing device CD, such as a mobile device, in accordance with an embodiment of the invention.
Fig. 12 is an example of a method 300 of operating of an iOS based mobile computing device, such as an iPhone®, for example.

### Detailed Description of the Drawings

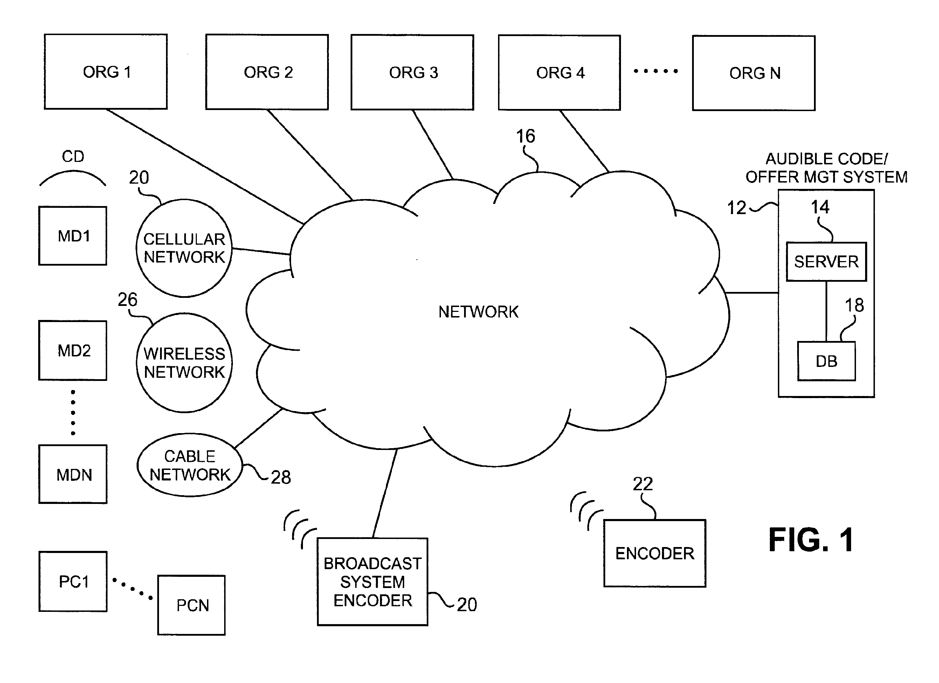

Fig. 1 is a schematic diagram of an environment 10 including embodiments of the present invention. The environment 10 comprises an inaudible code/offer management system 12 comprising a server 14 coupled to a network 16, and a database 18 under the control of the server. Organizations Org 1, Org 2, Org 3, Org 4 ...Org N, such as retail organizations, television networks, museums, and other types of organizations provide items of information, such as offers, coupons, advertising, explanatory information, etc., to the system 12 for correlation with inaudible codes, such as inaudible acoustic codes in the database 18.

A broadcast system 20, which may be a head end of a cable television system, a local television station, a radio broadcast station, and/or a local stereo system in a retail establishment, for example, broadcasts audible codes corresponding to respective offers in audio and audio/visual streams, via the network 16 and/or through airwaves, to computing devices CD, such as mobile devices MD1, MD2 ... MD and personal computers PC1 ... PCN, via the network 16. Herein, the term "audio stream" also includes audio/visual streams, as well as any other type of transmitted or broadcast stream including audio.

Users obtain the information corresponding to the inaudible codes in several ways discussed herein, in accordance with embodiments of the invention.

The environment 10 further includes an encoder 22 for inserting codes into audio and/or audiovisual streams. Encoders 22 for inserting audible codes may be of different types and may be in many locations. If live events are to be encoded, a streaming encoder may be used, for example. Pre-recorded programs may be encoded by a file-based encoder, for example. Techniques for encoding inaudible codes into live and pre-recorded audio streams by streaming and file-based encoders are well known in the art.

The encoder 22 may be separate from the code/offer management system 12, and/or part of the system 12. Encoders 22 may be provided at the broadcast system 20, for example, and/or at sources of television and radio content, to encode streams to be distributed through the network 16 and/or the airwaves. An organization Org 1 ... Org N may provide codes generated by the system 12 to the broadcast system 20 with an indication of when respective codes should appear in the program stream. Organizations Org 1 ... Org N, such as stores, may also have encoders 22 to insert audible codes into music to be played within or outside of their store, for example. Organizations Org 1 ... Org N may also provide music to be encoded with the codes to an encoder 22 at the system 12 or at another location.

In one embodiment of the invention, the code/offer management system 12 downloads offers and corresponding codes to the computing devices CD, via the network 16, for storage on respective computing devices. The computing devices CD receive the audio streams, analyze the streams to identify inaudible codes in the streams, and identify offers corresponding to respective codes already stored on the respective computing device, or the computing device may query the system 12 for an offer corresponding to a received code that is not found by the computing device, via the network 16.

The network 16 may be the Internet, for example. The network 16 may be or comprise other networks, as well, such as a cellular network, a wireless network, or a Wi-Fi network, for example. Computing devices CD may also connect to the network 16 via other networks. For example, one of the mobile devices MD1 may be a smart phone which may be coupled to the network 16 via a cellular network 24 or may be coupled directly to the network 16, as is known in the art. Another mobile device MD3, for example, may be a laptop or tablet that is connected to the Internet via a wireless network 26. The wireless network 26 may comprise a wireless router, for example, which may be connected to a cable network system 28. A desktop computer, such as PC1, may also be connected to the Internet via the wireless network 26 or the cable network system 28, for example. Computing devices CD may connect via a Wi-Fi network (not shown), as well. The network 16 may also be or include an intranet, or other types of networks, depending on the organization and the location of the computing devices CD to receive offers. Reference to the "network 16" encompasses the cellular network 24, the wireless network 26, the cable network 28, and/or other networks, such as a Wi-Fi network, that may be needed to couple computing devices CD to the code/offer management system 12, and vice-a-versa, even if those networks are not specifically identified.

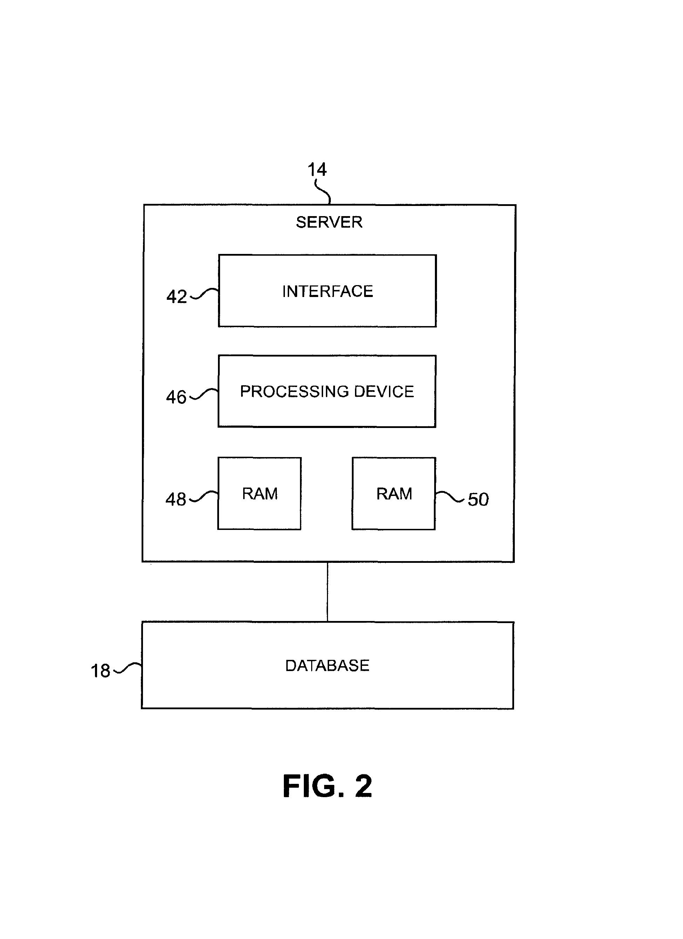

Fig. 2 is a schematic representation of an example of a server 14 that may be used in the audible code/offer management system 12, in accordance with embodiments of the present invention. The server 14 comprises an interface 42, a processing device 46, such as a computer, memory, such as random access memory ("RAM") 48, and non-volatile memory 50, such as magnetic hard drive or read-only memory ("ROM"), for example. The server 14 may comprise one or more servers, the processing device 46 may comprise one or more processing devices, and/or the database 18 may comprise one or more databases. While the database 18 in Fig. 1 is shown coupled to the server 14, the database may be part of the server 14, instead. In this example, codes and corresponding information, such as offers, coupons, etc., are stored in the database 18.

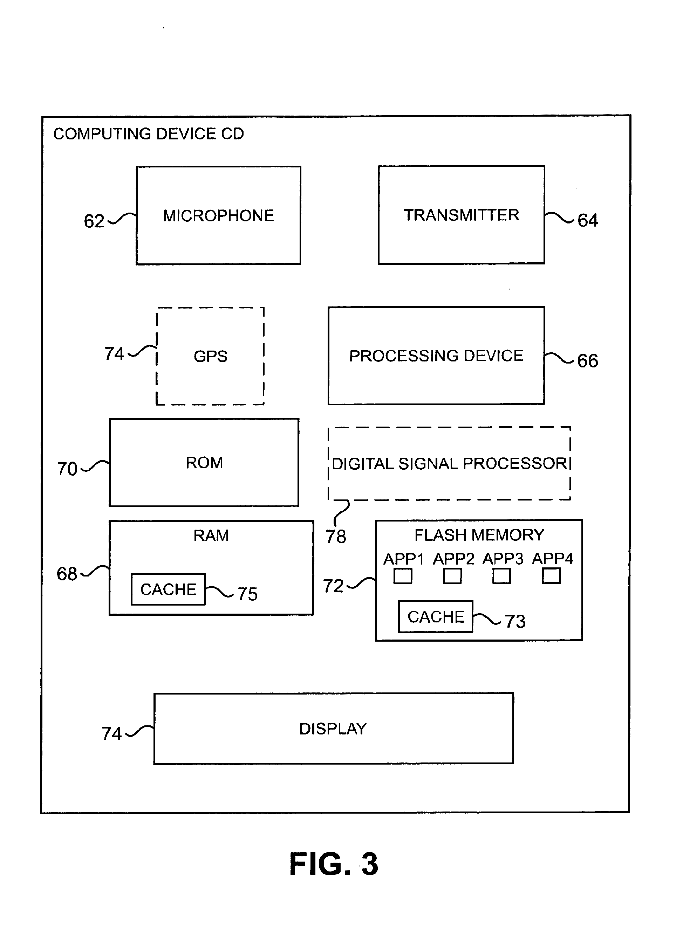

Fig. 3 is a schematic representation of an example of a typical computing device CD. The computing device CD comprises a microphone 62 and associated circuitry to receive audio streams, a transmitter 64 and associated circuitry, a processing device 66, such as a microprocessor, RAM 68, ROM 70, a flash memory 72, and a display 74, for example, as is known in the art. Wi-Fi and/or cellular communication circuitry (not shown) may be provided for connection to the network 16 and other operations of the computing device CD, as well. The RAM 68 may include one or more cache locations 75 for storage of codes and corresponding offers during operation, as described further below. The flash memory 72 may store one or more applications ("Apps") related to implementations of embodiments of the invention. The flash memory 72 also includes one or more cache locations to store codes and corresponding offers. In this example, APP1, APP2, and APP3 and one cache 73 are shown stored in the flash memory 72. If the computing device CD is a personal computer PC, such as a desktop computer, it may or may not include Apps, as discussed further below. If the computing device CD is a mobile device MD1...MDN, it may further include a GPS 76. A digital signal processor 78 may also be provided. The display 74 may be a touchscreen display or a non-touch screen display, depending on the computing device CD. The computing device CD may be any device including the components described above. Other examples of computing devices CD that may process audible codes include toys, for example.

The operation of the computing devices CD in accordance with embodiments of the invention is controlled by the processing device 66. In one example, the processing device 66 is controlled by suitable software stored in the ROM 70, including an operating system, and one or more applications ("Apps") downloaded to the computing device CD and stored in the flash memory 72, for example. Alternatively or in addition, a web-based App may control the processing device 66.

Organizations Org 1 ... Org N provide offers or other types of information to the system 12. Offers may be provided through a website of the audible code/offer management system 12, via the network 16, for example. Instead of an actual offer, an organization Org 1 ... Org N may provide a link to an offer on the organization's website or another location, for example. Other information or documentation, including coupons, explanatory material, etc., may correspond to a code, as well. The term "offer" includes all types of information that may be provided by an organization Org 1... OrgN to a user, including coupons, discounts, notices (such as recall information, updated instructions, public service announcements, etc.), contests, etc. An offer may be in any format selected by the respective organization Org 1 ... Org N. For example, the offer may be formatted as a PDF document, a Word document, a JPEG document, a video, or a web-link, for example.

The code/offer management system 12 generates an inaudible code, such as an inaudible acoustic code, corresponding to each offer and stores the code and corresponding offer in the database 18. The code may be randomly generated, for example. The code may be inserted into an audio stream by the system 12, if the system includes an encoder 22, and if desired by a respective organization Org 1...Org N. If the system 12 does not include an encoder 22, or if not desired by the organization, the code may be provided to the organization providing the respective offer so that the code may be inserted into the desired audio stream by the organization. The organization may send the code and stream to a third party encoder, or instruct the system 12 to send the code to the third party encoder. Techniques for inaudible acoustic code generation and encoding in an audio stream are known in the art.

The generated codes are associated with corresponding offers in the database 18, in a table, for example. The table may include an identification of the organization providing the offer, as well as conditions associated with the offer, if any. Examples of conditions on offers include a time period a respective offer is effective, a total number of offers that may be provided to computing devices, qualification conditions, such as whether related offers have been received, demographic restrictions, location restrictions, etc.

In accordance with one embodiment of the invention, the system 12 is informed of the codes and offers that have been received by a respective computing device CD and may use the prior exposure to or redemption of an earlier offer as a qualification for the reward of other offers. For example, a particular offer may only be made available only if a certain number of other specified offers have already been received by the respective computing device CD. In this way, a different offer may be provided in response to the same code if a user has already received that code one or more times, as determined by the organization providing the offer. This might happen if a user is in the same location, such as in the same store, for an extended period of time, where the same code is sent periodically, for example. In another example, an offer of greater value may be given as a "reward" for receiving and/or redeeming the same code multiple times. An offer may only make sense if a prior, other offer has been redeemed. For example, the subsequent offer may relate to the product purchased in response to an earlier offer. Multiple offers may be correlated with the same code in the table in the database 18, and the system 12 can track offer reception to enable this functionality, for example. This functionality may be enabled by a respective computing CD device, as well, which can store a similar table in the RAM 68 or other such memory to track offer reception, as well.

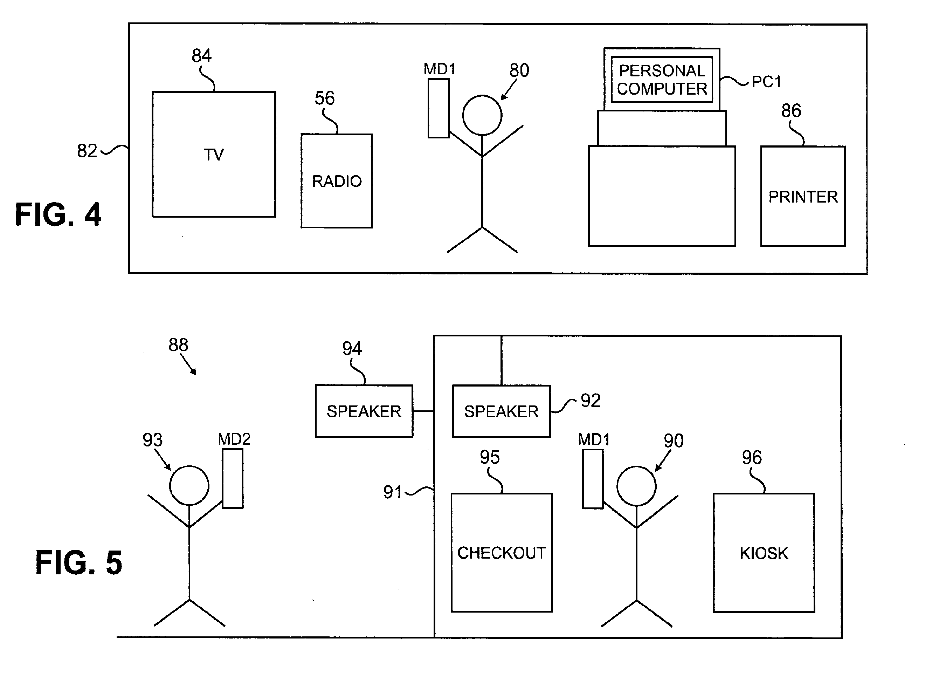

Fig. 4 is a schematic representation of an example of a first environment in which a computing device CD may pick up inaudible acoustic codes. In Fig. 4, a user 80 is shown in a room 82, which may be a room in the user's home, office, or hotel room, for example, with a mobile device MD1. A personal computer PC1 is also shown. The room 82 may also include a television set 84 and/or a radio 86. Both are shown in Fig. 4. Inaudible codes in audio streams transmitted by the television 84 and/or audio streams transmitted by the radio 86 may be received and analyzed by the mobile device MD1, the personal computer PC 1, and any other computing devices CD in the room 82 that are on and can receive and analyze the audio stream. It is noted that inaudible codes may be included in audio stream content played on the personal computer PC1 or mobile device MD1 such audio streams can be picked up by the microphone 62 of the same computing device CD or by another computing device.

In accordance with an embodiment of the invention, inaudible codes and corresponding offers are provided by the code/offer management system 12 to computing devices CD, for storage. Offers/codes may be pulled from the system 12 by a respective computing device CD, via the network 16, in response to a request from the respective device for an update of codes and corresponding offers. Respective computing devices may be configured to request new codes/offers, by respective Apps, for example. Requests for codes and corresponding offers may be made by respective computing devices CD when a respective computing device CD that had been off and/or disconnected from the network 16 is turned on or connected again, for example. An App may also request an update of codes and corresponding offers when the App is opened. A computing device CD or an App that has been open for a predetermined period of time may also request further updates after predetermined periods of time.

When codes and corresponding offers are downloaded to the computing device CD, they may be stored in the cache 75 in the RAM 68, or other such non-volatile memory device. The codes and corresponding offers may be stored in a table in the RAM 68, for example. When the computing device CD is turned on or when the content of the cache 75 is no longer needed, the content of the cache 75 may be transferred to the cache 73 in the flash memory 72 or other such non-volatile memory device, for example, for storage in a table, for example. When the computing device CD is off or the cache 73 is not in use, for example. When the computing device CD is turned on again or the content of the cache 73 is needed during operation, the contents may be transferred to the RAM 68.

Alternatively, the codes/offers may be pushed by the audible code/offer management system 12 to computing devices CD via the network 16 on a regular schedule, such as every few hours, for example. The system 12 may be configured to send the new codes and corresponding offers more or less often. Codes/offers may also be provided when a certain number of offers/codes are accumulated by the system 12.

It may be advantageous to provide codes and corresponding offers to mobile devices MD1...MDN for storage and retrieval when a respective code is received, because mobile devices can retrieve downloaded offers faster than querying the system 12. This may be particularly true when a respective mobile device MD1 is in an area with poor connectivity to a network 16.

In an alternative embodiment, codes and corresponding offers are not downloaded to respective computing devices CD. In this embodiment, identified codes are sent by respective computing devices CD to the code/offer management system 12, which searches the database 18 for the code and corresponding offer. Then the offer, or an indication that an offer is available, is sent to the computing device CD that provided the respective offer. This embodiment may be used with mobile devices MD1 ... MDN, as well.

When a computing device CD is in range of an audio signal, the signal is received up by the microphone 62 of the device. The signal is conveyed to the processing device 66 through appropriate circuitry (not shown), where it is decoded. The signal may be copied by the processing device 66 and stored in the RAM 68 or other such memory for analysis.

Received codes are compared to codes stored in the cache 75 in the RAM 68 or other such memory of the respective computing device CD. If there is a match, then a prompt that an offer has been received may be displayed on the display 42 of the mobile device. The prompt may be a pop-up, for example. The prompt may also be a link or icon that appears on the display 72 when an offer is available. An audible prompt, such as a ring or tone, or a physical prompt, such as vibration, may be provided, as well. The prompt may include options for the user 80, such as to view, save, or delete the offer. An option may be selected by touching the prompt on a touch screen display 74 or clicking on the prompt, for example. Alternatively the offer corresponding to the code may be displayed without a prompt, or saved without a prompt. An offer saved without a prompt may be offered for viewing by a prompt or display later, such as when a user checks a file of saved offers.

If an offer is selected for display on the display 74, additional options are also provided for selection by the user 80. Such options may include saving the offer for later review, printing the offer, or deleting the offer. A file of saved offers may be formatted in a similar manner to an email inbox, where the date and subject of each offer are displayed in chronological listing. The listing may be searchable. Offers from particular parties may be stored in separate files by a user. The user may have other formatting and display options as well.

The received offer may be saved in an offer file in the RAM 68 or other such volatile memory. The user 80 can search for a saved offer when the user wants to retrieve and display it. The App may be configured to assist in organizing saved offers and to remind the user 80 of stored offers, for example. The user 80 may be given the option of receiving reminders and how often to receive such reminders, by the App. When the computing device CD is turned off or the offer file is no longer needed, the contents of the file may be transferred to the flash drive 72 or other such non-volatile memory, for example.

A displayed offer may be redeemed in a variety of ways. For example, a displayed offer may be printed on the printer 86 and brought to the store providing the offer for redemption. Alternatively, if the offer is stored on a mobile device MD1, the mobile device may be brought to the store and the offer displayed for redemption. A store or other establishment may provide a facility for an offer on a mobile device to be printed, as well.

If there is not a match, the code and a corresponding offer may not yet have been downloaded by the system 12 to the respective CD. The computing device CD may then send the code to the code/offer management system 12 via the network 16, for example, to determine whether the system 12 can identify a corresponding offer stored in the database 18. The processing device 66 may assemble the code with additional information, such as an identification of the computing device CD, for example. Queries to the system 12 may be in the form of remote procedure calls (RPCs), for example.

The processing device 46 of the server 14 of the code/offer management system 12 checks the database 18 to determine whether there is an offer corresponding to the received code. If so, the corresponding offer, or an indication that there is a corresponding offer, may be provided to the respective computing device CD that sent the code by the processing device 46, via the network 16. The computing device CD may then prompt the user 80 of the presence of the offer, in the same manner as if the code/offer were stored on the computing device CD, as discussed above. If only an indication of the presence of an offer on the system 12 is received by the computing device CD, and the user 80 selects the option to display the offer, the computing device may request the offer from the system 12 and then display it. The user then has the same options as described above, to save, print, or delete the offer. It is noted that in the embodiment described above, where codes/offers are not provided to respective computing devices CD in advance, the computing device CD sends received codes to the system 12 to identify corresponding offers.

Currently, known GPS-based advertising Apps are only accurate to half-block areas, and only display copy; they cannot display pictures and video. They cannot, therefore, target people in proximity to a particular store making a particular offer. They also cannot be tied to a specific, limited number of acceptances of special offers. In one embodiment of the invention, in contrast, offers may be provided only to potential customers inside of or near a respective store providing the respective offers.

Fig. 5 is a schematic representation of another example of an environment 88 where inaudible codes may be detected, in accordance with another embodiment of the invention. In this example, the inaudible codes are provided in music or muzak played in a retail environment 88, for pick up by mobile devices MD1 and MD2. Here, a shopper 90 with a mobile device MD1 is shown inside of a store 91, where a first speaker 92 plays music. A second user 93 with a second mobile device MD2 is shown outside of the store 91. A second speaker 94 may also be provided outside of the store 91. A checkout station 95 and a kiosk 96 that enables an offer on a mobile device MD1 to be printed, are also shown in the store 91. A printed offer may be redeemed at the checkout station 95, for example. An offer presented on the display 72 of the mobile device MD1 may be directly redeemed at the checkout station 95, as well.

The speaker 92 and/or the speaker 94 may be used to make announcements and play music that includes inaudible codes. Multiple speakers may be provided inside and/or outside of the store. Music may be played by overhead speakers or by small speakers near entranceways, for example.

To encode music to be played, the store 91 or the system 12 may provide a sound track and the codes generated by the system 12 to the encoder 22 for insertion into the sound track. The encoder 22 may be in various locations, as discussed above. Alternatively, a retail establishment may have their own encoder 22. The sound track is then returned to the store 91, which plays the sound track over the speakers 92 and/or 94, when desired. The speakers 92 and/or 94 may also play encoded music from a radio station. Embedded codes received by the mobile devices MD1 ... MDN of shoppers 90, 93 may be processed to obtain corresponding offers, as described herein.

A shopper 90 walking through the store 91 may thereby receive offers while in the store. This may encourage a purchase that the shopper might not have otherwise made. This embodiment also facilitates the presentation of offers to shoppers 90 already in the store 91, on short or immediate notice. The presentation of short term offers, which might expire in a limited period of time, such as in one or several hours, for example, may also be provided directly to shoppers currently in the store.

Playing a sound track with embedded codes outside of the store 91 presents an opportunity to attract passers-by 93 who may not have intended to enter the store before receiving the offer. This may be particularly true of stores in malls, which comprise large numbers of stores arranged in one or more aisles. Many mall visitors intend to go to only particular stores, while others window shop and others just "hang-out." Providing offers to those passing by a store on their mobile devices MD1 ... MDN, for example, may greatly improve a store's business as new shoppers enter the store 91 to check and possibly take advantage of the offer. Those same shoppers may be exposed to other products and services in the store 91 that they may also purchase.

Codes may similarly be embedded in music played in other public places, such as in museums, parks, stadiums, etc., for pickup by mobile devices MD1 ... MDN and other computing devices CD.

As mentioned above, an App may control the operation of the processing device 66. The App may be a generic App or a dedicated App. A generic app can process codes and display offers for a plurality of organizations such as Org 1, Org 2, and Org 3, for example. A dedicated App can only cause display of offers from one organization, such as organization Org 4, which provides the App or to which the App is applicable. Dedicated Apps may be provided by organizations that prefer that their own App decode the codes corresponding to their own offers and display or otherwise process their offers.

In one example, the App is downloaded to selected computing devices CD, such as selected mobile devices MD ... MDN and/or selected personal computers PC1...PCN, by the system 12 or an organization Org 1 ... Org N, via the network 16, for storage in a conventional manner. The App may be a web-based App, instead. A web-based App may be more suitable for a personal computer PC1, for example, although mobile devices may use a web-based App, as well.

A downloaded App enables the processing device 66 to analyze audio streams picked up by the microphone 62 to identify inaudible codes, in a manner known in the art. In the case of a web-based App, a software program to analyze audio streams for codes and send the codes to the web-based App may be provided to the personal computer PC1. The corresponding offers may be provided by the code/offer management system 12 to the website hosting the App. Alternatively, the web-based App may send the codes to the code/offer management system 12, to identify corresponding offers. The web-based App may also be hosted by the system 12.

In order for a computing device CD of a user to interact with the code/offer management system 12 in this example, the user and computing device CD must register with the system. When the computing device communicates with the system 12, the computing device CD may be recognized by the system 12 by a user ID and/or a device ID provided in the communication sent to the system 12 via the network 16. In one example, the device ID includes the user ID. Code processing Apps downloaded to a respective computing device CD also need to be registered with the system 12 in order for a computing device CD to receive codes and corresponding offers relating to respective Apps. Requests to the system 12 to update codes and corresponding offers, or to search for an offer corresponding to a particular code, may also include an identification of one or more Apps on the device. In one example, the system 12 will not respond to the request if it relates to an App that is not registered.

The operating system of the respective computing device CD may affect the functioning of a dedicated App in a respective device. For example, iOS based mobile devices do not allow for background services, such as Apps and other components, other than the primary service that is open and/or interacting with a user. Android-based operating systems, in contrast, allow additional services to operate in the background while a primary service is interacting with the user or is otherwise operating.

### iOS Implementation

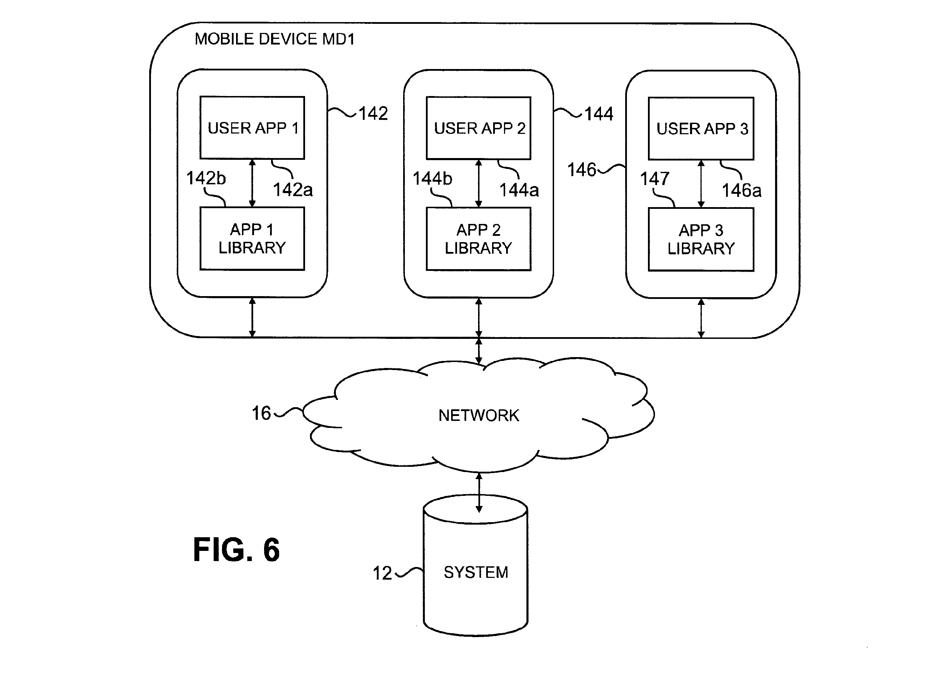

In an example of an embodiment of the invention shown in Fig. 6, a dedicated App 142 for a mobile device MD1 with an iOS operating system, such as an iPhone®, able to analyze inaudible codes and obtain offers, comprises an App 142a and a code analysis and management library 142b, bundled in a package. Fig. 6 is a schematic representation of two dedicated App packages 142, 144 provided by two different organizations Org 1, Org2, respectively, to process codes for offers provided by the organizations, along with other functions provided by the organization's App, in an iOS mobile device MD1. The mobile device MD1 in Fig. 6 also includes a third dedicated App 146 from the organization Org3 in which the code processing functions of the library are integrated in the App. The App packages 142, 144, and the App 146 may be downloaded from the organizations via the network 16 and stored in non-volatile memory, such as the flash memory 72, for example.

Each App package 142, 144 comprises an App 142a, 144a of the organization, and a library 142b, 144b providing code-related functionality. The libraries 142b, 144b each comprise software run by the processing device 66 to perform the code-related functions of the respective App package 142, 144 by the processing device 66. Whenever a respective App package 142, 144 is opened, a corresponding library 142b, 144b runs as well, to process received codes. The libraries 142b, 144b also act as intermediaries between the respective Apps 142, 144 and the code/offer management system 12, via the network 16. Only the library of an open App operates to control the processing device 66 to process codes and perform other code-related functions, in an iOS based computing device CD.

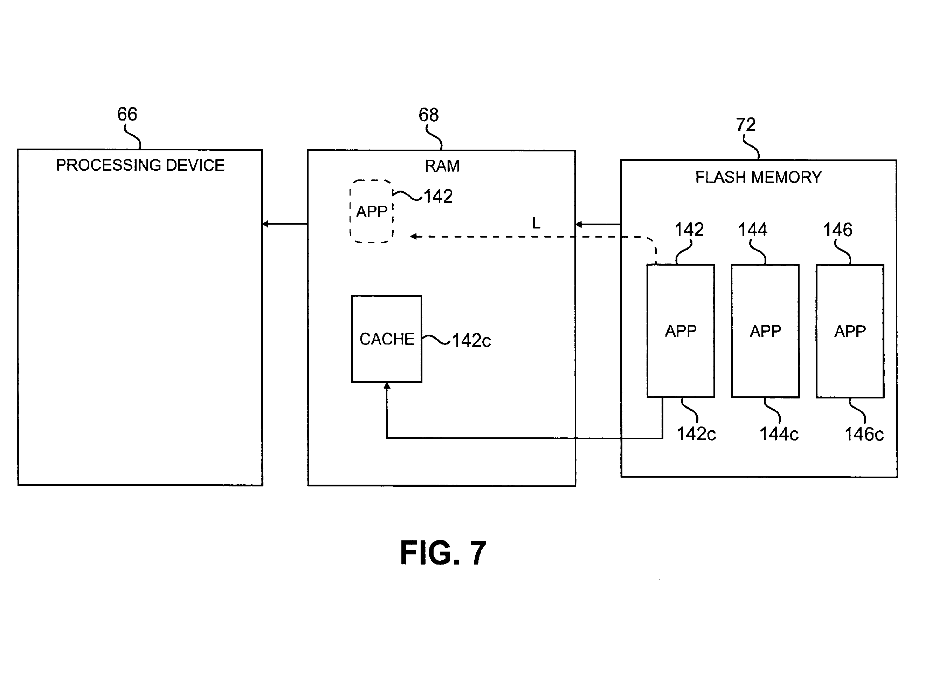

Fig. 7 includes an arrow "L" to schematically indicate the launch of an App, here the App package 142 stored in the flash memory 72, to the RAM 68. The arrow "C" indicates the copying or transfer of the cache 142c or content of the cache 142c from the flash memory 72 to the RAM 68 when the App package is 142 is launched. The App 142 now controls the code-related and App related functions of the processing device 66. The libraries 142b, 144b are configured to enable the processing device 66 to analyze audio streams, identify inaudible codes, if any, and search respective caches corresponding to the respective library for the code and corresponding offer. If an offer is found, the respective App 142a, 144b causes display of the options discussed above to the user (display, save, delete, for example). The App 146, which does not have a distinct code processing library, is configured to cause the processing device 66 to perform these functions, as well.

In accordance with an embodiment of the invention, when an open App/App package in an iOS based device requests an update of the codes and corresponding offers from the code/offer management system 12, the system 12 only provides the codes/offers for the open App/App package, via the network 16. The codes/offers are stored in the cache of the open App/App package in the RAM 68 by the processor 66 under the control of the library of the open App/App package. When the running App/App package is closed or the computing device CD is turned off, the cache with the updated codes/offers in the RAM 68 is transferred to the flash memory 72 for continued storage.

In one example, when the App package 142 is launched, the library 142a causes the processing device 66 to send a message to the system 12 via the network 16, requesting an update of codes and corresponding offers applicable to the App package 142. In this example, if the system 12 verifies that the computing device CD, the user, the library 142b, and the App package 142 are registered with the system 12, based on the identifying information in the request, the system 12 will identify the codes and corresponding offers applicable to the App package 142 that have accumulated by the system 12 since the last time an update was requested by the App package 142, and send them to the computing device CD via the network 16. The library 142b causes the processing device 66 to store the received codes/offers in the cache 142c the RAM 68. Only code/offer updates from the system 12 related to the App 142 will be provided by the system 12 at later times or on request.

When the App package 142 is closed and the App package 144 is launched, for example, the library 144b of the App 144 causes the processor 66 to request an update of applicable codes and corresponding offers from the code/offer management system 12 via the network 16. The server 14 verifies that the computing device, the user, device CD, the library 144b, and the App package 144 are registered and then identifies and provides the requested update of codes and corresponding offers via the network 16. The library 144b causes the processor 66 to store the updated codes/offers in the cache 144c, which is in the RAM 68. The library 144b of the App 144 may then search the cache 144c for offers corresponding to codes received while the App package 144 is open.

If a received code is not found in the cache of the open App, such as the App package 144, for example, then the respective library 144b causes the processing device 66 to send the code to the code/offer management system 12 via the network 16, as discussed above. The system 12 receives the code and the identifying information, and verifies that at least the computing device and the user are registered with the system based on the identifying information in the request. If verified, the server 14 searches the database 18 for the code. If an offer corresponding to the code is found, the processing device 46 further determines whether the requesting library 144b and App package 144 are qualified to receive the offer at this time. The library 144b and the App package 144 are qualified if they have been registered with the system 12 and if the App package 144 is associated with the organization that provided the offer. If so, the system 12 will send the offer to the computing device CD that sent the code, or may send a message to the computing device CD that an offer is available. These operations may be performed by the processor 46 of the server 14, for example. The computing device CD may prompt the user and/or display the offer, under the control of the App 144a or the library 144b, as described above. Subsequently or simultaneously, codes are communicated to the system 12 regardless of the status of the code, for server synchronization.

If the offer is not from the organization associated with the open App package 144, then the App package 144 does not qualify to receive the offer because the offer cannot be processed by the open App package. The system 12 will not send the offer to the computing device CD. Such a code is sent to the system 12, even though the corresponding offer cannot be processed by the App package 144, because an offer corresponding to that code will not be found in the library 144c. In accordance with one embodiment, when offers are available in the system 12 but cannot be processed by the currently open App identified in the message requesting the offer from the system 12, the processing device 46 of the server 14 processing device 46 stores in a file, flags in the table, or otherwise indicates that the offer is applicable to a registered App that is not currently open, such as the App 144. The file or flag may also indicate the respective computing device CD that sent the code. If a file is used, it may be a file dedicated to the respective computing device CD. The offer may be considered to be awarded at that time, even though the respective computing device CD cannot receive and/or open the offer.

When the App package 144 is closed and the App package 142 is launched, for example, the library 142b causes the processing device 66 to request an update of applicable codes and corresponding offers from the code/offer management system 12, via the network 16. If the user, computing device and requesting App 144 are determined to be registered by the processing device 46, the processing device searches the database 18 for codes and corresponding offers related to the requesting App 144, as above.

The request may include a request to provide or identify offers corresponding to codes received by the computing device CD that were related to the App package 142, while another App/App package was open. The processing device 46 may then also check for the stored, flagged, or otherwise indicated offers for the App 144, accumulated since the last update request by the App 144 and could not be opened by the then open App, and send the offers to the computing device CD or inform the computing device CD of the available offers. Instead of including the request for those offers, the processing device 66 may be configured to search for such offers when the code/offer update request is received.

In this way, the computing device CD can obtain the benefit of codes received when applicable dedicated Apps 144 are not open. It appears to the user of the respective computing device CD that the codes for the App 144 have been received and the offers awarded, even when the App 144 is not running. This may be done seamlessly, without further involvement of the prior open App, such as the App 142.

It is noted that while certain organizations may not allow codes from other organizations to be processed to retrieve corresponding offers, they may need to allow their dedicated Apps to be configured to identify a code in an audible stream that is applicable to another organization and to send the code to the code/offer management system 12, because, there may not be enough information in a code itself for the computing device CD to identify the organization providing the offer. It may therefore be the case that only the system 12 may be able to determine whether the received code relates to the open App or another App, based on the information in the database 18.

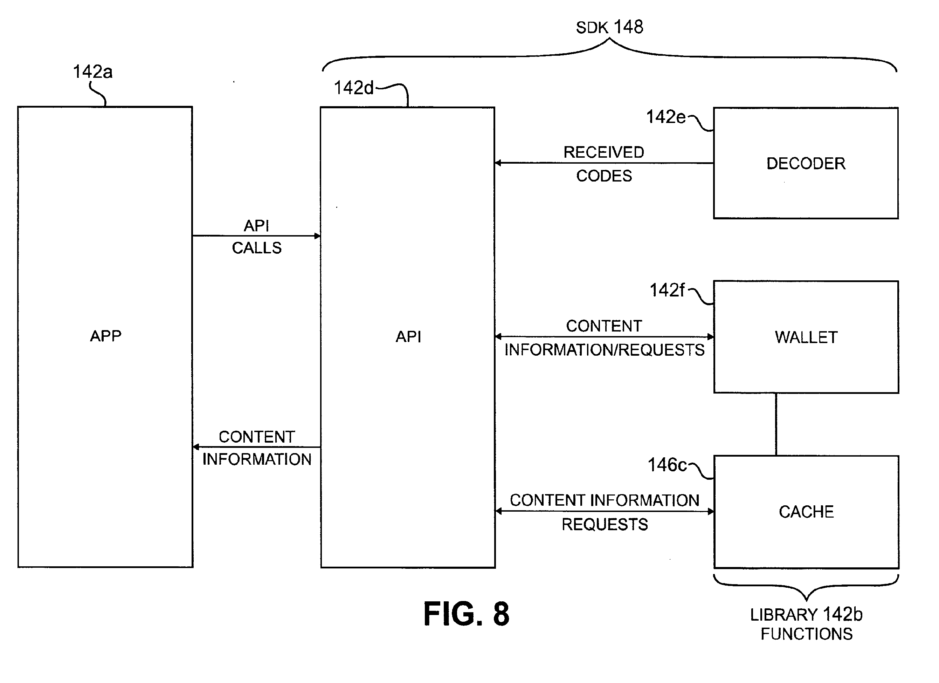

Fig. 8 is an example of a structure of an App package for an iOS operating system, in accordance with an embodiment of the invention. In this example, an App, such as the App package 142, includes the App 142a, the library 142b, and an application programming interface 142d between the App and the library. The API 142d is an intermediary between the App 142a and the library 142b. To create the App package 142, a software development kit ("SDK") including the API 142a and the library 142b may be provided to a developer. The SDK comprises a set of interface descriptions (header files in an objective-C API, for example) and associated library files. The API 142d conveys commands from the App 142a to the library 142b, and conveys information from the library-controlled functions to the App. The SDK in this example is structured as a singleton object that controls the decoding and data coordination. The singleton is accessed through the API. The SDK comprises the primary interface/singleton that manages communications.

In this example, the library of the SDK defines a decoder engine 142e, which causes the processing device 66 to decode the audio code. A wallet store 142f is defined in the RAM 68 to store information about wallet items (data received), including received codes and offers. The cache 142b stores codes and corresponding offers provided by the system 12, as discussed above.

The SDK 148 interacts with multiple components of the computing device CD to record audio samples used in the decoding process and to send information to the system 12 via the network 16. The SDK 148 also communicates with the storage devices, such as the flash memory 72 and/or the RAM 68, to cache codes and corresponding offers provided by the code/offer management system 12. The SDK 148 may also communicate with the digital signal processor 78, if present, and the GPS 74, if present, to enable location-based code presentation.

The SDK 148 may be added to existing Apps by a developer, with minor changes to the existing App 142a, for example. The SDK 148 may also be incorporated into newly developed Apps as they are being designed. While referring to the App package 142, the above-discussion is applicable to the App package 144 and the App 146, as well.

The operation and structure of the generic App 146 in an iOS device would be similar to that of the dedicated Apps described above, except that with the open generic App, the library will search a cache including codes and corresponding offers for a plurality of organizations. If a code/offer is not found in the generic cache, it may relate to an organization that is not one of the plurality of organizations related to that App, or the code/offer has not been downloaded yet from the system 12. In either case, the generic App sends the code to the system 12 via the network 16.

### Android Implementation

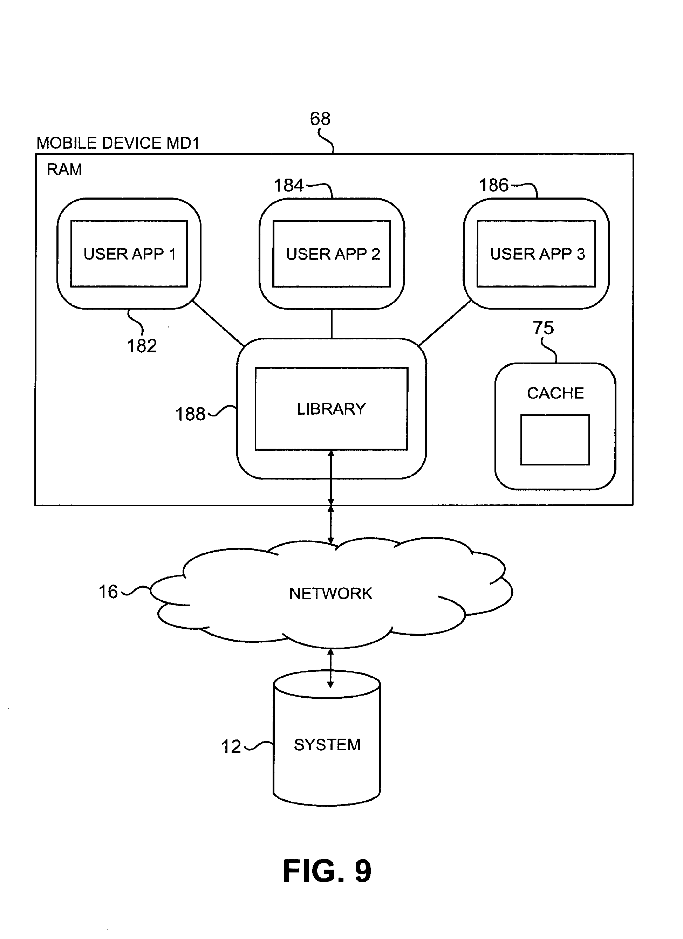

Since the Android operating system allows for the operation of background services, including Apps, mobile devices MD1...MDN including an Android operating system can use a single library running as its own application for sharing by multiple applications. Fig. 9 is a schematic representation of three open dedicated Apps 182, 184, 186 that share a library 188 in the RAM 68. The library 188 may define a single cache 75. The Apps 182, 184, 186 may each be dedicated or generic Apps.

Each App 182, 184, 186 may be launched into the RAM 68 and may run, at least in the background, at all times so that offers received from any of the organizations Org 1 ... Org N relating to any of the Apps 182, 184, 186 may be processed and corresponding offers identified in the cache 75, if present. Each App 182, 184, 186 may interact with the library 188 in a similar manner as described above with respect to Fig. 6, to analyze audio streams, identify audible codes, if any, and to search the cache, such as the cache 75, for the code and corresponding offer, if any. A single API may interface with all of the Apps, or separate APIs may be provided in each App.

If an offer corresponding to a code is not found in the cache, the library 188 causes the processing device 66 to send the code to the code/offer management system 12 with identifying information, as discussed above. In this example, along with the device ID, the client ID, and the library 188 ID, identifications of the multiple running Apps 182, 184, 186 may also be provided in the message to the system 12. In one example if the message is verified as being from a registered device and user, the processing device 46 of the server 14 searches the database 18 for an offer corresponding to the code. If such an offer is found, the server 14 determines whether the computing device CD sending the code is qualified to receive the offer, based on the code and offer are for an open App registered by the computing device. If the offer relates to one of the registered and open Apps, it is provided to the computing device CD via the network 16. The shared library 188 receives the offer corresponding to the code, with an identification of the relevant App. The library 188 directs the code and offer to the relevant App for further processing. In another example, verification and qualification may be performed at the same time.

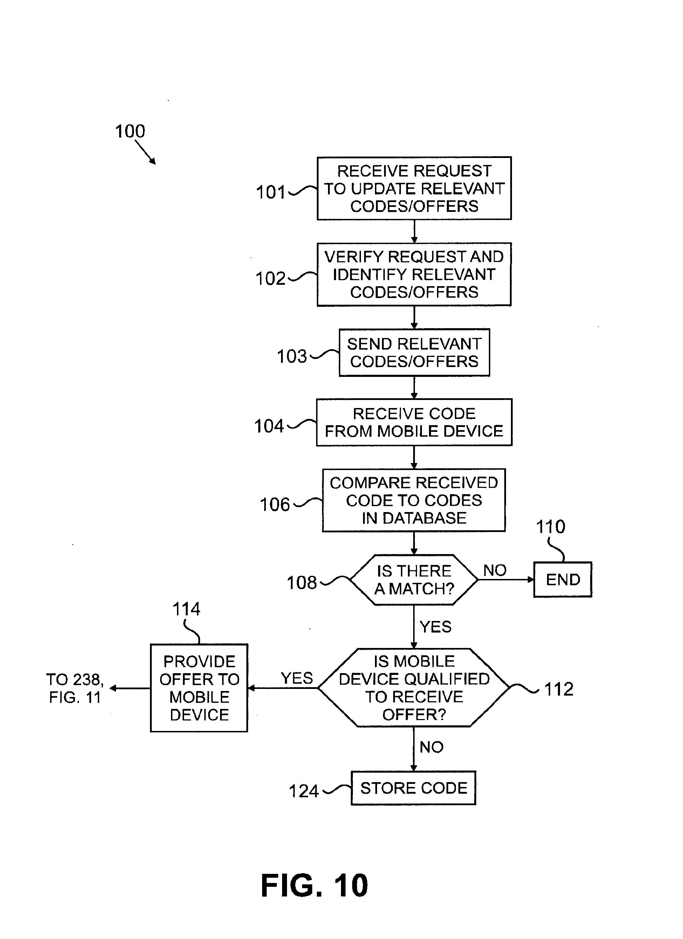

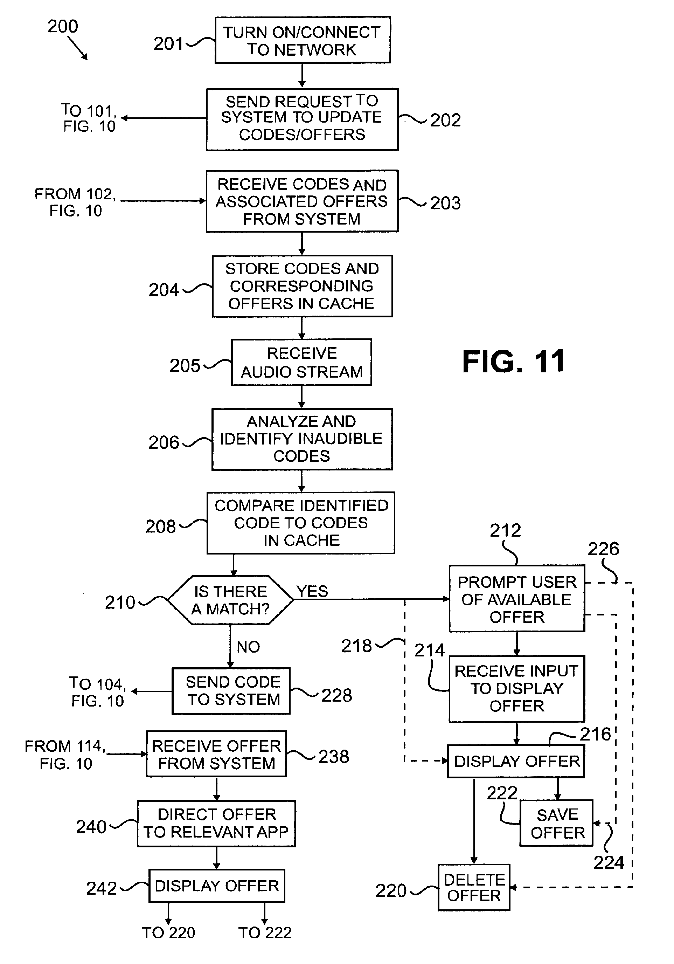

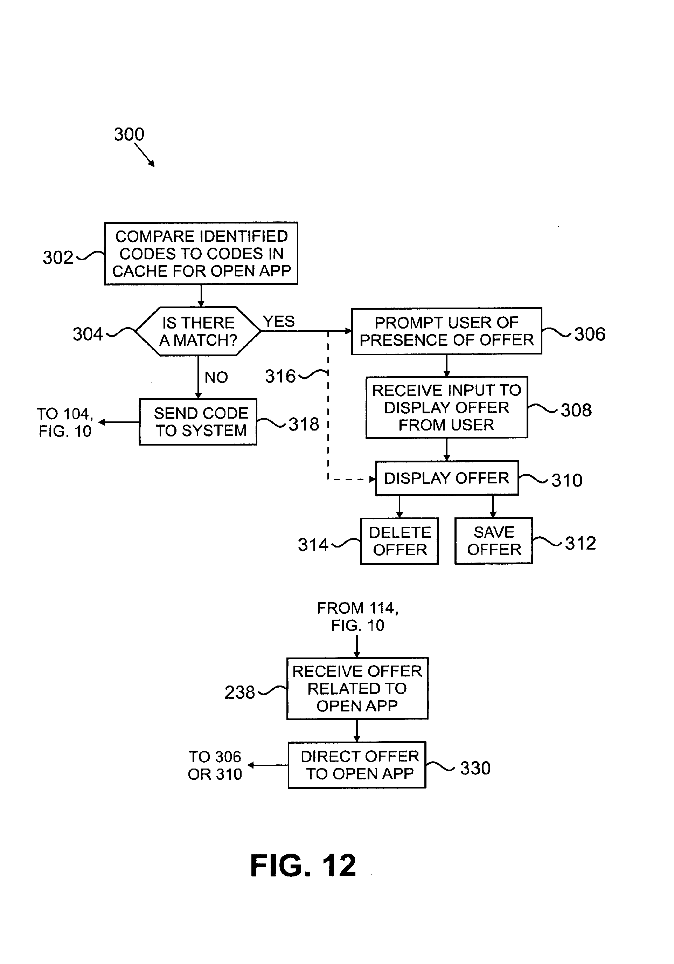

Fig. 10 is an example of a method 100 of operating the code/offer management system 12, in accordance with an embodiment of the invention. Fig. 11 is an example of a method 200 of operating a computing device CD, such as a mobile device MD1, in accordance with an embodiment of the invention. In the examples of Figs. 10 and 11, the computing device CD is a mobile device MD1 having an Android operating system, and multiple Apps 182, 184, 186 share a common library 188 and cache 75 in the RAM 68. The examples of Figs. 10 and 11 are applicable to other computing devices with Android operating systems, as well. The operation of the code/offer management system 12 and the operation of the mobile device MD1 with the Android operating system will be described together. Operation of an iOS based computing device is discussed with respect to Fig. 12.

In this example, the mobile device MD1 is turned on or connects to the network 16 in Step 201, Fig. 11. The library 188 causes the processing device 66 to request an update to codes and corresponding offers from the code/offer management system 12 via the network 16, in Step 202, Fig. 11. The request may include a mobile device ID, user ID, a library ID, and/or an identification of the running Apps 182, 184, 186 associated with the library 188, for example. If not included in the identifying information the identity of the mobile device MD1 may be used to determine the Apps registered with the system 12, for that particular mobile device. The identity of the library may indicate whether the library is a shared library or a library dedicated to a particular App.

The request to update relevant codes/offers is received by the code/offer management system 12 via the network 16, in Step 101. After verifying that the mobile device MD1, the user, the library 188, and Apps 182, 184, and 186 are registered with the system 12, as discussed above, the processing device 46 of the server 14 identifies relevant codes/offers, in Step 102, Fig. 10. Relevant codes/offers may be identified based on the identification information in the request, for example. Since the library is shared among Apps 182, 184, 186 in this example, the processing device 46 locates and sends all the codes and corresponding offers related to those Apps to the mobile device MD1, via the network 16, in Step 102 in Fig. 10. The codes/associated offers may be provided via the network 16, for example. The codes are received by the mobile device MD1 in Step 203, Fig. 11 and stored in the applicable cache 75 by the processing device 66 under the control of the library 188, in Step 204.

When the mobile device MD1 is within range of an audio stream, the stream is received via the microphone 62 of the mobile device, in Step 205. The audio stream is analyzed and inaudible codes are identified by the processing device 66 under the control of the library 188, in Step 206.

An identified code is compared to the codes stored in the cache 75 in the RAM 68 by the processing device 66 under the control of the library 188, in Step 208. It is then determined by the processing device 66 whether there is a match, in Step 210. If there is a match, the library 188 may direct the offer to the related App, which causes the processing device 66 to prompt the user 80 that an offer is available, in Step 212. If the user 80 provides an input to cause display of the offer, in Step 214, the offer is displayed, in Step 216. Alternatively, the App may be configured to display the offer in Step 216 without a prompt, as indicated by broken arrow 218.

After viewing an offer, the offer may be deleted, in Step 220, or saved, in Step 222, based on the user's input. A saved offer may be saved in a file of saved offers, for example. A user 80 may save an offer in response to receiving the prompt in Step 222, as well, as indicated by arrow 224, or delete the offer, as indicated by arrow 226.

If there is not a match in Step 210, then the code is sent to the code/offer management system 12 with the identifying information concerning the mobile device, the user, the library 188, and the open Apps 182, 184, 186 by the processing device 66 under the control of the library 188, as discussed above, in Step 228. Returning to Fig. 10, the code is received by the system 12, in Step 104. The message containing the code is verified as to the identity of the mobile device MD1 and/or the user, and if verified, in this example, the code is compared to the codes in the database 18 by the processing device 46 of the server 14, to determine whether the an offer is associated with the code that has not been provided by the mobile device MD1, in the database 18.

It is determined whether there is a match, in Step 108. If not, then there may have been a mistake in encoding or decoding of the code, or an offer may have expired, for example. In any case, no offer will be provided to the mobile device MD1 in response to that code, and the process ends in Step 110 with respect to that code.

If there is a match, the processing device 46 determines whether the mobile device MD1 that sent the code is qualified to receive the offer corresponding to the code, in Step 112. In this example, the library 188 is identified in the message containing the code as a shared library that is capable of directing offers between different Apps. The Apps 182, 184, 186 are identified as being open in the message.

If the mobile device MD1 is not qualified to receive the offer, because, for example, the offer relates to an App that is not on the mobile device MD1, is not open, or is not registered with the system 12, the code may be stored by the processing device 46 in association with an indication of the mobile device MD1, in the Step 124. The offer may be provided to the mobile device MD1 is the device qualifies to receive the offer in a later request.

If the code relates to an open, registered App that shares the library 188, the processing device 46 in this example determines that the mobile device MD1 is qualified to receive the offer, and the offer is sent to the mobile device MD1 in Step 114.

Returning to Fig. 11, the offer is received by the mobile device MD1 in Step 238 and the processor 66 directs the offer to the relevant App, under the control of the library 188, in Step 240. In this example, the offer is displayed by the processing device on the display 74, under the control of the App, in Step 242. As above, the user may delete the offer in Step 220, or save the offer in Step 222. If the user 80 is in a store 104, for example, the offer may be redeemed at that time. If not, or if redemption is not desired at that time, then the saved offer may be redeemed at a later date. Instead of receiving the offer directly, the user may be prompted by the mobile device MD1, as in Steps 212-220.

Alternatively, instead of receiving the offer, the mobile device MD1 may be informed of the presence of the offer by the system 12. In response, the processing device 66 may prompt the user of the availability of an offer. If the processing device 66 receives an input from the user to display the offer, the processing device may request the offer from the system 12.

Fig. 12 is an example of a method 300 of operation of an iOS based mobile device MD2, such as an iPhone®, for example. In this example, the App package 142 is open. Steps 201-206 in Fig. 11 also take place in the method 300, except that in Step 202, the request to update offers/codes will only include an identification of the one open App package 142. The system 12 will therefore only identify and send an update of codes/offers related to the one open App sending the request, in Steps 103 and 104 (Fig. 10). The codes/offers received codes/offers in Step 203 are stored in the cache 142c by the processing device 66 of the mobile device MD2, under the control of the library 142b.

When an code identified in the audio stream in Step 206 is compared to the codes in cache by the processing device 66 in the mobile device MD2 in Step 302 (Fig. 12), it is only compared to the codes in the cache 142c associated with the open App 142, under the control of the library 142b. It is then determined whether there is a match, in Step 304. If Yes, then the App 142a causes the processing device 66 to prompt the user, display the offer if requested by the user, and save or delete the offer if requested by the user, in Steps 306-316 of Fig. 12, respectively. The details of Steps 306-316 in Fig. 12 are the same as Steps 212-226 of Fig. 11. As above, the offer may be displayed in Step 310 without prompting, as indicated by the broken arrow 316.

If there is no match in Step 304, the code is sent to the system 12, in Step 318 with information identifying the user, the mobile device MD2, the library 142b making the request, and the App package 142, in this example. The system 12 receives the code and identifying information in Step 104. The processing device 46 of the server 14 verifies the identity of the mobile device MD2 and the user, and compares the code to the codes in the database, in Step 106 of Fig. 10, to determine if there is a match with an offer stored in the database 18, in Step 108, as discussed above.

If there is a match in Step 108, it is then determined by the processing device 46 whether the mobile device MD2 is qualified to receive the offer corresponding to the code, in Step 112. If the information provided by the mobile device MD2 in the message with the code indicates that the offer is related to the open App package 142 and the library 142b, then the mobile device MD1 is found to be qualified to receive the offer corresponding to the code by the processing device 46, because the library 142b and the App package 142 can process the offer. The method 100 then proceeds to Step 114, and the offer is received by the mobile device MD1 in Step 238 in Fig. 12. The received offer is directed to the App 142a by the processing device 66 under the control of the library 142b, in Step 330 in Fig. 12. The method may proceed to Step 306 or 310 for prompting and/or display, as described above.

If the processing device 46 determines that the code and offer relate to an App/App package that is not open on the mobile device MD1, and therefore the library 142b cannot direct the offer to the appropriate App/App package, then the mobile device is not found to be qualified to receive the offer corresponding to the code, in Step 112 of Fig. 10, because the library 142b cannot direct the offer to or otherwise interact with the closed App, the library of the closed App, or the cache of the closed App. The mobile device MD1 may also be found not to be qualified if the offer relates to an App that is not available on the mobile device MD1.

If the mobile device MD1 is found not to be qualified in Step 112, the code and offer may be stored in memory, such as the database 18, in a file or table associated with the respective device, for example. The stored offer may be retrieved and sent in response to a message from a newly opened App/App package to update codes/offers, if the offer relates to that App/App package.

### Offer Filtering Associated Algorithms

If users are inundated with offers that they are not interested in, they may be deterred from participating in all programs of this type. Filtering techniques performed by the system 12 and/or respective computing devices CD can mitigate this problem.

One embodiment of the invention uses registration information filtering, wherein the system 12 filters offers to be presented to particular computing devices CD and/or to a particular user based on one or more parameters. One parameter may be "group membership," which may include basic demographic information reported by users during registration with the code/offer management system 12 (such as age, gender, postal code or location, for example). Users may register themselves and one or more computing devices CD. Members of a household may register as a group or individually. Personal preferences or category membership may also be designated during registration or at a later time. These may include subject matters of interest (and/or non-interest), price ranges, organization preferences, location preferences, age, language offers should be received in, etc.

In one example, a user, through a configuration screen on the display 74 of their computing device CD, may indicate that they are under 21 years of age, and speak Spanish. The computing device CD later receives audio from a television advertisement for an alcoholic beverage that has an inaudible code embedded in it. The computing device CD analyzes the audio stream, identifies the code, and determines that no response should occur on the basis of the fact that the user is under 21. In another example, the system 12 does not provide codes and corresponding codes and corresponding offers to this user's computing device CD related to alcoholic beverages, so that when the computing device receives the audio containing the inaudible code related to an alcoholic beverage, the code is not found in the memory of the computing device. If the computing device CD sends the code to the system 12 after it is not found in the memory, the system 12 will not send the corresponding offer to the computing device.

In another example, the computing device CD receives an audio stream including an inaudible code related to an advertisement for a specific brand of soda. The computing device analyzes the audio stream, identifies the inaudible code, and searches the memory for a corresponding offer in Spanish or other language selected by the user.

Another type of filtering that the system 12 and/or the computing device CD may use is algorithmic preference filtering. In one example of an algorithmic filtering, the respective computing devices CD report interactions with an offer to the code/offer management system 12. Reported interactions may include receipt of the offer, opening and closing of the offer, duration of the display of the offer, storage of the offer, receipt of a prompt, retrieval of a stored offer, display of a stored offer, deletion of the offer, requests for additional information, and/or redemption of the offer, for example. Messages may be sent to the system 12 via the network 16 at the beginning and ending of each interaction. From this information the system 12 may determine the durations of the interactions, for example. Apps may be configured so that the computing device CD calculates durations and forwards them to the system 12. The messages provided by respective computing devices CD may include a time stamp of the time of the interaction, an identification of the respective computing device CD, and an identification of the offer, for example.

A redemption message may be provided to the system 12 by the computing device CD, if the device can provide such information. Redemption information may also be provided by the organization accepting the offer, such as the retail establishment 104 in Fig. 5.

In one example, user responses are ranked by the system 12 on a like/dislike scale ranging from -1 to +1, with 0 being neutral or no information, -1 complete dislike, and +1 complete like. In this example, redemption of an offer at the first opportunity is considered to be a "complete like," and is awarded a value of +1. Deletion of an offer at the first opportunity is considered to be a "complete dislike" and is awarded a value of -1. Other numerical value scales and award values may be used as well. Calculations are performed by the processing device 46 based on the interaction data stored on the database 18.

The time deleted versus time obtained (the amount of time from receipt of an offer to deletion of the offer) is used in this example as an interest decay factor, which moves the offer score in a positive direction, depending on how much time elapses before an offer is deleted. The decay factor may be linear or logarithmic, for example. The longer the amount of time before deletion, the more the score is moved from -1 towards 0. Additionally, views of the offer by a user cause the offer score to shift towards a positive direction along the scale, so that the more times a user looks at an offer, the more positive the ranking becomes. This enables an offer that is eventually deleted to still receive a positive score, since the user has at least shown some interest by viewing the offer for a significant duration of time or a significant number of times, in contrast to deleting the offer without consideration. The duration of any or all of the other interactions discussed above may also be used to move the scale. The scale may be essentially continuous, if desired. For example, the minimum resolution of the scale may be 10⁻¹⁸. The resolution may be less, as well. Different weightings may be applied to the different interactions.

At any given time, a tentative score is available to the system 12 before the offer is deleted or redeemed. Once an offer is deleted or redeemed, its score is finalized for that offer, and stored in memory device of the code/offer management system 12, such as in the database 18.

The like/dislike scale may be used to make additional offers or to restrict offers based on user metrics for similar offers. For example, offers of a type (product, field of product, or cost of product, for example) that receives one or more negative ratings may not be offered again, or offered less often, than offers of a type receiving one or more positive ratings. Providing at a later time offers of a type that have been rejected quickly in the past, enables the code/offer management system 12 to identify changes in the user's behavior and preferences.

Alternatively, a threshold time may be established so that if an offer of a certain type is deleted before the threshold time, offers of that type are not provided again, or are provided less often.

This algorithm tracks user behavior and preferences without requiring explicit feedback from each user with respect to each offer.

The like/dislike scale may also be used to scale offer types or categories provided by organizations Org 1 ... Org N. For example, an organization Org 1 ... Org N may provide the system 12 with categories of interest, such as travel, fashion, automotive products, etc. Based on user activity with respect to offers in each category, the code/offer management system 12 can determine which category of offers a particular user may be interested in. This may enable more accurate profiling of users than questionnaires that are provided during typical registration processes for websites, mailing lists, or memberships, for example. It can also be used in conjunction with such questionnaires, to adjust the preferences expressed by a user in a questionnaire with their actual behavior over time.

Both the computing devices CD and code/offer management system 12 can also track the many other factors surrounding a computing device 12 at the time that an offer is received and acted upon. This includes, but is not limited to, time of day, accelerometer readings, ambient noise levels, application usage statistics, current location, the type of device in use, and network connectivity, for example. Any of these factors may be used by themselves or in conjunction with other factors to determine which offers a user is most likely to be interested in, under these or other particular circumstances.

The system 12 may apply filtering in Steps 102 and/or 112, Fig. 10, for example, where the system determines which codes and corresponding offers to the respective CD. The computing device CD may apply filtering in Step 206, Fig. 11, during the identification of an inaudible code in the audio stream, for example. The inaudible code may include data related to the subject matter and/or other characteristics of the corresponding offer, which the computing device CD can compare to a user's preferences entered during registration or at a later time, and/or as determined by algorithmic techniques, for example, as discussed above. Alternatively or in addition, the computing device CD can filter based on such data associated with the stored offer after it is identified based on the code, in Step 210. The computing device may also apply filtering of an offer received from the system 12 in response to a request, in Step 228. The library of the App receiving the offer may also apply filtering, in Step 240.

The code/offer management system 12 offers further flexibility to organizations Org 1 ... Org N by allowing limited time or limited number offers. In both cases, the limits may be soft or hard limits. A soft limit is an approximate limit while a hard limit is an exact or near exact limit. Such limits may be defined in the database 18, such as in the table of codes and corresponding offers or another table, for example.

Hard limits may be set by not downloading codes for offers subject to the limits to the computing mobile devices CD so that they do not contain the codes and corresponding offers in their own caches. In this case, computing devices CD must send codes subject to a hard limit to the code/offer management system 12, as discussed above. When codes are sent to the system 12, the system searches the database 18 for offers corresponding to the respective code as discussed above. If there is a time or number limit associated with the code and offer, the system 12 will not send the offer if the time is exceeded or if the allowed number of offers has already been sent to computing devices CD. The processing device 46 of the server 14 counts the numbers of offers sent and compares it to the number limit in the database 18. The sever 14 can similarly compare receipt times of the code to the time limit in the database 18 for the corresponding offer.

Soft limits may be similarly set in the database 18, for example. Since an exact limit is not necessary, codes and corresponding offers subject to soft limits may be downloaded to computing devices CD. Since the code/offer management system 12 is informed by respective computing devices CD of the receipt of codes, it can count the number of corresponding offers that have been received by the respective computing devices. When the numerical or time limit has been reached, the system 12 may stop providing offers corresponding to the code to respective computing devices CD in future updates. However, a greater number of offers than the limit may have already been retrieved by respective mobile devices CD from their own caches. Since the limit is a soft limit, these retrieved offers may be obtained.

Although example embodiments have been shown and described in this Specification and Figures, it would be appreciated by those skilled in the art that changes may be made to the illustrated and/or described example embodiments without departing from the scope of the invention, which is defined by the following claims.

## Claims

1. A system for providing information to a user via a user computing device, comprising:
a processing device; and
a database to store codes and corresponding items of information to be provided to user computing devices;
wherein the processing device is configured to:
provide the codes and corresponding items of information to respective user computing devices via a network, to be stored in the respective user devices and to be selectively retrieved by a user in response to inaudible codes corresponding to respective items received by a respective computing device in an audio stream.

2. The system of claim 1, wherein the processing device is further configured to:
receive items of information from third parties;
generate a code corresponding to each item of information; and
store each item of information in the database in association with the corresponding code.

3. The system of claims 1 and 2, wherein the processing device is further configured to:
receive a code from a user's computing device;
search the database for the received code;
identify an item of information corresponding to the received code, if available; and
provide an indication to the user's computing device that an item of information corresponding to the code is available to the user's computing device, via the network, and/or
provide the item to the user's computing device, via the network.

4. The system of claim 3, wherein, if the received code corresponds to an item of information from an organization related to an application ("App") stored on the computing device that is closed on the device, then the processing device is configured to provide the code and corresponding item of information to the computing device when the App is open and the computing device requests an update of codes and corresponding items of information.

5. The system of claims 1 - 4, wherein the processing device is configured to filter codes and corresponding items of information provided to a user's computing device based, at least in part, on:
information provided by a user of a respective computing device, and/or
algorithmic filtering based on activities of a respective user's computing device.

6. A computing device to receive items of information from a third party, comprising:
a processing device;
a display;
a microphone; and
memory to store codes and corresponding items of information;
wherein the processing device is configured to:
analyze audio streams received by the microphone to identify inaudible codes encoded in the audio stream;
search the memory for a code corresponding to the identified inaudible code;
identify an item of information corresponding to the code, if a code corresponding to the inaudible code is found; and
display the item of information on the display, and/or
provide an indication of the presence of the item of information on the display.

7. The computing device of claim 6, wherein the processing device is configured to provide an option on the display to view, save, delete, and/or print the item.

8. The computing device of claims 6 and 7, wherein the processing device is configured to:
receive codes and corresponding items of information from a third party, via a network;
store the codes and corresponding items in the memory; and
request an update of codes and corresponding item from the third party.

9. The computing device of claims 6 - 8, wherein, if a code corresponding to the inaudible code is not found in the memory, the processing device is configured to:
send the code to the third party, via the network;
receive an item corresponding to the code from the third party; and
provide an indication that an item is available on the display; and/or
display the item.

10. The computing device of claims 6 - 9, wherein the processing device is configured to:
receive the audio stream from a television, from a radio, or from a speaker, in a home, in an office, in a hotel room, or in a public place.

11. The computing device of claims 6 - 10, further comprising at least one library stored in memory and at least one application ("App") stored in the memory, wherein the processing device is configured to:
analyze, search, and identify items of information under the control of the at least one library; and
to display an item of information corresponding to a code under the control of the at least one App; and
wherein a respective App is a generic App configured to cause the processing device to display items of information from a plurality of organizations, and/or
a respective App is a dedicated App configured to display items of information from a respective organization.

12. The computing device of claim 11, further comprising:
an iOS operating system stored in memory;
at least one dedicated App stored in memory; and
at least one dedicated library corresponding to a respective dedicated App, the library comprising software configured to cause the processor to:
define a respective cache to store codes and corresponding items of information related to a respective organization;
analyze audio streams to identify inaudible codes;
search the respective cache defined by the respective App for codes corresponding to identified inaudible codes;
identify items of information corresponding to respective codes based on the comparison; and
request an update of codes and corresponding items of information from the third party, to store in memory.

13. The computing device of claim 12, wherein, if the code sent to the third party corresponds to an item of information from an organization related to a closed App, then the code and corresponding item of information is received by the computing device when the closed App is launched and the library of the launched App requests an update.

14. The computing device of claim 11, further comprising:
an Android operating system stored in memory;
a plurality of Apps stored in memory;
a library stored in memory, wherein the library is configured to:
define a cache to store offers and corresponding items of information for each of the Apps, and
analyze audio streams, identify codes, and search the cache for matching codes, for each of the Apps.

15. The computing device of claims 6 - 14, wherein the processing device is configured to filter items of information provided to a respective user via the computing device based, at least in part, on information provided by the user and/or algorithmic filtering based on activities of the user.

16. A method of receiving and displaying items of information by a computing device, comprising:
receiving an audio stream by a computing device, the computing device comprising a processing device;
analyzing the audio stream to identify inaudible codes encoded in the audio stream, by the processing device;
comparing the identified inaudible code to codes stored in memory in association with respective items of information, by the processing device;
searching the memory for a code corresponding to the identified inaudible code; and
identifying an item of information corresponding to the code, if a code corresponding to the identified inaudible code is found; and
displaying the retrieved item of information on a display, or
displaying an indication of the presence of the item of information on the display.

17. The method of claim 16, comprising:
receiving the audio stream inside of or outside of a store, the audio stream being broadcast by an audio system of the store.

18. The method of claims 16 and 17, further comprising:
receiving codes and corresponding items of information from a third party, via a network;
storing the received codes and corresponding items in memory; and
if a code corresponding to the inaudible code is not found in the memory:
sending the code to the third party via the network; and
receiving an item of information corresponding to the code, from the third party, via the network, or
receiving an indication that the item of information is available from the third party.
